(19) Europäisches Patentamt
European Patent Office
Office européen des brevets

(11) Veröffentlichungsnummer: **0 075 703**
**A1**

(12) # EUROPÄISCHE PATENTANMELDUNG

(21) Anmeldenummer: 82107357.4

(22) Anmeldetag: 13.08.82

(51) Int. Cl.³: C 08 L 83/00
C 08 G 77/46, C 08 G 77/38
C 08 L 83/04

(30) Priorität: 27.08.81 DE 3133869

(43) Veröffentlichungstag der Anmeldung: 06.04.83 Patentblatt 83/14

(84) Benannte Vertragsstaaten: BE DE FR GB IT NL

(71) Anmelder: Th. Goldschmidt AG
Goldschmidtstrasse 100
D-4300 Essen(DE)

(72) Erfinder: Kollmeier, Hans-Joachim, Dr.
Barkhorstrücken 27
D-4300 Essen(DE)

(72) Erfinder: Langenhagen, Rolf-Dieter
Kampstrasse 5
D-4321 Hattingen Niederwenigern(DE)

(54) **Verfahren zur Addition von organischen Siliciumverbindungen mit SiH-Gruppen an Verbindungen mit olefinischen Doppelbindungen.**

(57) Die Erfindung betrifft bei einem Verfahren zur Addition von Silanen oder Siloxanen, welche SiH-Gruppen aufweisen, an Verbindungen mit olefinischen Doppelbindungen, die Verwendung von Katalysatoren der Formel

$$[YX_2(NH_3)_2]$$

wobei Y ein Platin- oder Palladiumrest,
X ein Chlor-, Brom- oder Jodrest oder die $NO_2$-Gruppe ist.

Die Katalysatoren weisen hohe Selektivität auf. Neben- und Disproportionierungsreaktionen werden vermieden.

EP 0 075 703 A1

Croydon Printing Company Ltd.

Th. Goldschmidt AG, Essen

# Verfahren zur Addition von organischen Siliciumverbindungen mit SiH-Gruppen an Verbindungen mit olefinischen Doppelbindungen

Die Erfindung betrifft ein Verfahren zur Addition von Silanen oder Siloxanen, welche SiH-Gruppen aufweisen, jedoch frei von Substituenten sind, welche nach Abspaltung vom Si-Atom als Protonenakzeptoren reagieren, an Verbindungen mit olefinischen Doppelbindungen in Gegenwart von Katalysatoren der Platingruppe.

Die Verwendung von Platinkatalysatoren für die Anlagerung von Silanen oder Siloxanen mit SiH-Gruppen an Verbindungen mit einer oder mehreren olefinischen Doppelbindungen ist bekannt und z.B. in dem Buch "Chemie und Technologie der Silicone", Verlag Chemie, 1960, Seite 43, und in der Patentliteratur, z.B. in der DE-OS 26 46 726, beschrieben. Dabei wird als bevorzugter Katalysator $H_2PtCl_6 \cdot 6\ H_2O$ genannt.

Diese Anlagerungsreaktion verläuft jedoch nur dann ohne nennenswerte Bildung von Nebenprodukten, wenn die Verbindungen, welche olefinische Doppelbindungen aufweisen, frei von Gruppen sind, die in Konkurrenz zur Anlagerungsreaktion mit der SiH-Gruppe reagieren können. Hierzu ist insbesondere die an Kohlenstoff gebundene Hydroxylgruppe zu rechnen. Diese miteinander konkurrierenden Reaktionen können wie folgt dargestellt werden.

1. Anlagerungsreaktion 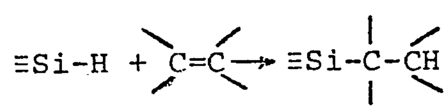

2. Konkurrenzreaktion $\equiv Si-H + \equiv COH \longrightarrow \equiv Si-O-C\equiv + H_2$

In der Praxis kommt es aber häufig vor, daß Wasserstoffsilane oder Wasserstoffsiloxane an olefinisch ungesättigte Verbindungen, die gleichzeitig Hydroxylgruppen oder andere reaktive Gruppen tragen, angelagert werden müssen. Ein Beispiel einer solchen Reaktion ist die Anlagerung eines Wasserstoffsiloxans an einen Alkohol oder Polyether der allgemeinen Formel

$$CH_2{=}CH-(CH_2-)_nO-(CH_2-CH_2-O-)_x(CH_2-\underset{}{\overset{CH_3}{\overset{|}{C}}}H-O-)_yH$$

worin n = 0 bis 10, x = 0 bis 100, y = 0 bis 100, und, wenn x und y = 0 sind, $n \geqq 1$ ist. Derartige Umsetzungsprodukte von Polyetheralkoholen mit Wasserstoffsiloxanen spielen als Schaumstabilisatoren bei der Herstellung von Polyurethanschaumstoffen sowie als Tenside in anderen Anwendungsbereichen, z.B. in der Kosmetik-, Lack- und Textilindustrie, eine bedeutende Rolle.

Es besteht deshalb ein Bedürfnis nach einem Katalysator, der einerseits eine hohe Aktivität in bezug auf die Anlagerung der SiH-Gruppen an olefinische Doppelbindungen aufweist und andererseits zu wenig Nebenreaktionen führt, wobei neben der vorgenannten Konkurrenzreaktion in Form der Reaktion der SiH-Gruppen mit COH-Gruppen auch Disproportionierungsreaktionen innerhalb der eingesetzten Silan- oder Siloxanverbindungen vermieden werden sollen. Hierunter ist eine Umverteilung der SiH-Gruppen in dem üblicherweise im Gemisch vorliegenden Silan bzw. Siloxan zu verstehen.

Weitere Neben- oder Folgereaktionen sind die Umwandlung der eingesetzten Allylgruppen in Propenylgruppen und die mögliche Vernetzung der OH-Endgruppen aufweisenden Anlagerungsprodukte über die Acetalbildung mit den Propenylethergruppen. Beide Reaktionen werden durch acide Katalysatoren wie z.B. $H_2PtCl_6 \cdot 6\,H_2O$ gefördert und führen einerseits zu einer ungenügenden Umsetzung der SiH-Gruppen, andererseits zu einem Viskositätsanstieg des Endproduktes.

Der Erfindung liegt somit die Aufgabe zugrunde, einen für die Anlagerung der SiH-Gruppen an olefinische Doppelbindungen besonders selektiven Katalysator aufzufinden, durch den die erwähnten Neben- und Folgereaktionen vermieden werden.

Überraschenderweise wurde nun gefunden, daß diese Aufgabe dadurch gelöst werden kann, daß man bei dem Verfahren der SiH-Addition an olefinische Doppelbindungen als Katalysatoren Verbindungen der allgemeinen Formel

$$\left[YX_2(NH_3)_2\right]$$

worin Y ein Platin- oder Palladiumrest,
X ein Chlor-, Brom- oder Jodrest oder die $NO_2$-Gruppe ist,

in wirksamen Mengen verwendet.

Besonders bevorzugt werden die Platin enthaltenden Katalysatoren verwendet.

Die Katalysatoren können stereoisomer in ihrer cis- oder trans-Form vorliegen. Besonders wirksam sind dabei die in der cis-Form vorliegenden Verbindungen.

Die einzusetzende Menge an Platinkatalysator richtet sich nach Reaktivität und dem Molekulargewicht der Reaktionspartner. Im allgemeinen verwendet man $10^{-2}$ bis $10^{-8}$ Mol, vorzugsweise $10^{-3}$ bis $10^{-6}$ Mol, der vorgenannten Katalysatoren auf jeweils 1 Mol SiH-Gruppen im Silan oder Siloxan.

Üblicherweise wird man einen Überschuß der Verbindungen mit olefinischen Doppelbindungen einsetzen, um sicherzustellen, daß die in dem Silan bzw. Siloxan enthaltenen SiH-Gruppen möglichst quantitativ reagieren.

Zur Durchführung der Reaktion ist es zweckmäßig, den Katalysator zusammen mit der Verbindung mit den olefinischen Gruppen vorzulegen und das Wasserstoffsilan oder Wasserstoffsiloxan langsam zuzusetzen, damit möglichst eine gleichmäßige Reaktion zwischen einem Überschuß von Verbindungen mit ungesättigten olefinischen Gruppen mit solchen mit SiH-Gruppen erfolgt. Der Katalysator kann in der Verbindung mit den olefinischen Gruppen ganz oder teilweise gelöst sein. Der Grad der Löslichkeit der Katalysatoren hängt dabei von der Polarität der Verbindungen mit olefinischen Doppelbindungen ab. Handelt es sich beispielsweise bei den Verbindungen mit olefinischen Doppelbindungen um solche, die gleichzeitig Hydroxylgruppen aufweisen, wie die obengenannten ungesättigten Polyetherole, ist eine ausreichende Löslichkeit für die Katalysatoren gegeben. Ist der prozentuale Anteil der Hydroxylgruppen, z.B. bedingt durch höhere Molekulargewichte, gering oder sind keine Hydroxylgruppen vorhanden, kann sich die Löslichkeit der Katalysatoren so weit verringern, daß die zusätzliche Verwendung von Lösungsmitteln für den Katalysator vorteilhaft sein kann. Als Beispiel eines hierfür geeigneten Lösungsmittels kann Dimethylformamid genannt werden.

Es ist selbstverständlich möglich, die gesamte Reaktion in einem Lösungsmittel durchzuführen, wobei man Lösungsmittel auswählt, welche in bezug auf die Reaktionspartner inert sind. Beispiele derartiger Lösungsmittel sind insbesondere Benzol, Toluol und Xylol.

Die gewünschte Anlagerungsreaktion beginnt bereits bei Raumtemperatur abzulaufen. Es empfiehlt sich jedoch, höhere Temperaturen anzuwenden. Bevorzugt sind Temperaturen von 25 bis 150°C, insbesondere Temperaturen zwischen 50 und 120°C. Bei Verwendung eines Lösungsmittels ist die Temperaturobergrenze durch dessen Siedepunkt gegeben.

Wie im Oberbegriff des Patentanspruchs gefordert, müssen die Silane oder Siloxane frei von Substituenten sein, welche vom Si-Atom abgespalten werden können und dann als Protonenakzeptoren reagieren, weil sie mit dem Katalysator zu reagieren imstande sind und ihn dabei inaktivieren. Beispiele derartiger, in größerer Menge nicht tolerierbarer Gruppen sind Si-Halogengruppen, Si-Sulfonsäuregruppen, Si-Sulfatgruppen.

Die beim erfindungsgemäßen Verfahren zu verwendenden Kataly-

satoren der allgemeinen Formel

$$\left[YX_2(NH_3)_2\right]$$

sind an sich bekannt und in Gmelins Handbuch der Anorganischen Chemie, 8. Auflage, Band 68, Teil D, 1957, beschrieben. Ebenso ist die Herstellung der Reaktionspartner, d.h. der SiH-Gruppen aufweisenden Silane oder Siloxane sowie der olefinische Doppelbindungen aufweisenden organischen Verbindungen bekannt. Die Silane oder Siloxane sind z.B. in dem Buch "Chemie und Technologie der Silicone", Verlag Chemie, 1960, beschrieben.

Beispiele geeigneter siliciumorganischer Verbindungen mit SiH-Gruppen sind:

- monomere Silane, wie z.B. $R_3SiH$; $R_2SiH_2$; $RSiH_3$;
- cyclische Silane, wie z.B. $(RHSiO)_4$; $(RHSiO)_3$;
- lineare oder verzweigte oligomere oder polymere Siloxane

$$R_3SiO\text{-}(R_2SiO\text{-})_a(\underset{\displaystyle H}{\underset{|}{R\text{Si}}}O\text{-})_bSiR_3,$$ wobei a $\geqq$ O und b $\geqq$ 1 ist;

$$HR_2SiO\text{-}(R_2SiO\text{-})_c(\underset{\displaystyle H}{\underset{|}{R\text{Si}}}O\text{-})_dSiR_2H,$$ wobei c und d $\geqq$ O sind;

$$R_3SiO\text{-}(R_2SiO\text{-})_e\left[\begin{array}{c} R \\ | \\ SiO\text{-} \\ | \\ O \\ | \\ (R_2SiO\text{-})_e(RHSiO\text{-})_fSiR_3 \end{array}\right]_g(RHSiO\text{-})_fSiR_3$$

wobei e $\geqq$ O, f $\geqq$ 1 und g $\geqq$ 1 ist.

Dabei bedeutet in den vorgenannten Formeln R Gruppen, die die Anlagerungsreaktion nicht behindern, wie Alkylgruppen mit 1 - 8 Kohlenstoffatomen; substituierte Alkylgruppen mit 1 - 8 Kohlenstoffatomen, wie die 3-Chlorpropyl-, 1-Chlormethyl-, 3-Cyanopropylgruppe; Arylgruppen, wie die Phenylgruppe; Aralkylgruppen, wie die Benzylgruppe; Alkoxy- oder

Alkoxyalkylgruppen, wie die Ethoxy- oder Ethoxypropylgruppe. Dabei kann innerhalb eines Moleküls R auch verschiedene Bedeutungen haben. Bevorzugt sind jedoch Verbindungen, bei denen alle Reste R oder deren überwiegende Zahl die Bedeutung eines Methylrestes haben.

Beispiele geeigneter kohlenstofforganischer Verbindungen mit olefinischen Doppelbindungen sind Verbindungen der Formel

$$CH_2{=}CH-CH_2-O-(CH_2CH_2O-)_x(CH_2-\overset{R'}{\overset{|}{C}}HO-)_y\ R'',$$

wobei $x$ = 0 bis 100,

$y$ = 0 bis 100,

R' eine gegebenenfalls substituierte Alkylgruppe mit 1 bis 4 Kohlenstoffatomen ist und

R" einen Wasserstoffrest oder eine Alkylgruppe mit 1 bis 4 Kohlenstoffatomen,

die Gruppe $-\underset{\underset{O}{\|}}{C}-R'''$, wobei R"' ein Alkylrest ist,

die Gruppe $-CH_2OR'$ oder 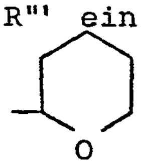 ,

eine Alkarylgruppe, wie die Benzylgruppe oder die Gruppe $-\underset{\underset{O}{\|}}{C}-NH-R'$

bedeutet.

Ferner sind beispielsweise Verbindungen der Formeln

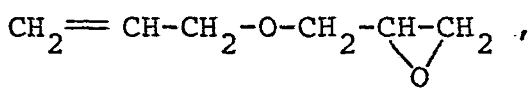 ,

$CH_2{=}CH-CH_2-O-CH_2-\underset{\underset{OH}{|}}{C}H-CH_2-OCH_3$ ,

$CH_2{=}CH-CH_2-O-CH_2-CH_2-CN$ geeignet.

Die beim erfindungsgemäßen Verfahren einzusetzenden Katalysatoren zeigen die geforderte hohe Selektivität für die Anlagerungsreaktion, führen zu einer hohen Reaktionsausbeute und vermeiden eine mögliche Disproportionierung innerhalb der Siloxankomponente.

Die Selektivität der verfahrensgemäß zu verwendenden Katalysatoren zeigt sich deutlich darin, daß auch Polysiloxane, die mehr als 10 SiH-Gruppen pro Molekül enthalten, ohne Vergelung mit allylgestarteten Polyethermonoolen umgesetzt werden können. Es werden dabei keine Vernetzungsreaktionen beobachtet, und die erzielten Ausbeuten sind hoch. Demgegenüber erhält man beim Einsatz von $H_2PtCl_6 \cdot 6\ H_2O$ als Katalysator unter vergleichbaren Bedingungen insgesamt geringere Umsätze und bei Erhöhung der Katalysatormenge infolge von Neben- oder Weiterreaktionen Endprodukte mit steigender Viskosität bis hin zur völligen Vergelung des Reaktionsansatzes.

Die Selektivität der Katalysatoren ist natürlich dann noch ausgeprägter, wenn die Hydroxylgruppen, die in den Verbindungen mit olefinischen Doppelbindungen enthalten sind, nicht in Form primärer, sondern sekundärer Hydroxylgruppen vorliegen.

Es ist zweckmäßig, die bei dem erfindungsgemäßen Verfahren eingesetzten Katalysatoren nach der Anlagerungsreaktion wieder aus dem Endprodukt zu entfernen.

Hierzu ist z.B. die Behandlung des Reaktionsansatzes mit einem Filterhilfsmittel, wie z.B. Bentonit, geeignet, auf dem sich die Katalysatoren niederschlagen. Filterhilfsmittel und Katalysatoren können dann gemeinsam durch Filtration abgetrennt werden, wodurch zudem die Rückgewinnung des als Katalysator eingesetzten Platins möglich wird.

Das erfindungsgemäße Verfahren wird durch die folgenden Beispiele noch näher erläutert. Dabei werden die in den Beispielen genannten prozentualen SiH-Umsätze indirekt bestimmt, indem man das erhaltene Reaktionsprodukt mit n-Butanol in alkalischem Medium behandelt und die Menge noch abspaltbaren Wasserstoffs volumetrisch bestimmt.

0075703

## Beispiele 1 - 11

In einem Vierhalskolben, der mit Rührer, Thermometer, einer Gaseinleitung und einem Destillationsaufsatz versehen war, wurden 280 g (ca. 25 val-% Überschuß bezogen auf SiH) eines Allylpolyethermonools mit einer JZ von 29,9, dessen OH-Gruppen sekundär waren und der 78 Gew.-% Ethylenoxid und 22 Gew.-% Propylenoxid im Polyoxialkylenanteil enthielt, in 520 ml Toluol vorgelegt. Unter Stickstoffatmosphäre wurden 150 ml Toluol zur aceotropen Entfernung von Wasser abdestilliert. Danach wurde der Kolben mit einem Rückflußkühler versehen und durch die Apparatur während der weiteren Umsetzung Stickstoff geleitet. Bei einer Temperatur von 105°C wurden bei den Versuchen 1 - 11 unterschiedliche Mengen an Platin in Form von cis-$[PtCl_2(NH_3)_2]$, $H_2PtCl_6 \cdot 6\ H_2O$ (10 %ig in i-Propanol) oder cis-$[Pt(NO_2)_2(NH_3)_2]$ zugesetzt und 5 Min. eingerührt. Nun wurden jeweils 92 g eines Siloxans mit der durchschnittlichen Formel

$$(CH_3)_3SiO[(CH_3)HSiO]_{2,9}[(CH_3)_2SiO]_{9,1}Si(CH_3)_3$$

in 20 Min. eingetropft. Direkt nach dem Zutropfen und nach weiteren 1, 2,5 und zum Teil 4 Stunden wurde der SiH-Umsatz bestimmt. Nach der Reaktion wurden die Ansätze bei 60°C mit 3,7 g Bentonit versetzt und 1 Stunde gerührt, anschließend filtriert und durch Destillation bei 70°C und ca. 20 mbar vom Toluol befreit.

Die mit den einzelnen Katalysatoren in unterschiedlichen Mengen erhaltenen Ergebnisse sind in nachfolgender Tabelle dargestellt. Zur besseren Vergleichbarkeit wurden hierbei, wie in den nachfolgenden Beispielen, die Katalysatormengen in ppm Pt, bezogen auf die eingesetzte Menge der beiden umzusetzenden Reaktionspartner, angegeben.

Die in der Tabelle angegebenen Daten über den SiH-Umsatz und die Viskositäten der Endprodukte zeigen den Vorteil der beanspruchten Verbindungen. Bei vergleichbaren Pt-Konzentrationen ergeben die beanspruchten Verbindungen eine ähnliche

oder teilweise höhere katalytische Aktivität - gemessen am SiH-Umsatz - als $H_2PtCl_6 \cdot 6\ H_2O$, und gleichzeitig liegen die Produktviskositäten niedriger, was einen deutlich geringeren Anteil der zu teilweiser Vernetzung führenden Nebenreaktionen belegt.

| Nr. | Katalysator mg | Katalysator Verbindung | ppm Pt (bezogen auf Siloxan + Polyether) | % SiH-Umsatz nach dem Zutropfen | % SiH-Umsatz nach 1 Std. | % SiH-Umsatz nach 2,5 Std. | % SiH-Umsatz nach 4 Std. | Viskosität vom Endprodukt mPa·s (bei 20°C) |
|---|---|---|---|---|---|---|---|---|
| 1 | 45,8 | cis-$[PtCl_2(NH_3)_2]$ | 80 | 87,9 | 99,0 | 99,5 | - | 464 |
| 2 | 22,9 | " | 40 | 86,6 | 97,8 | 98,2 | 98,8 | 372 |
| 3 | 5,7 | " | 10 | 86,9 | 97,0 | 97,9 | - | 351 |
| 4 | 1,1 | " | 2 | 24,2 | 76,8 | 84,9 | 93,9 | 372 |
| 5 | 790 | $H_2PtCl_6 \cdot 6\ H_2O$ 10%ig in i-Propanol | 80 | 85,8 | 92,3 | 94,5 | - | 2683 |
| 6 | 395 | " | 40 | 84,1 | 93,5 | 93,7 | 94,1 | 882 |
| 7 | 98,8 | " | 10 | 77,8 | 92,1 | 93,1 | 93,4 | 414 |
| 8 | 19,8 | " | 2 | 37,7 | 70,0 | 76,1 | 85,2 | 328 |
| 9 | 49,0 | cis-$[Pt(NO_2)_2(NH_3)_2]$ | 80 | 71,4 | 89,3 | 96,5 | - | 444 |
| 10 | 24,5 | " | 40 | 60,5 | 78,4 | 92,7 | 95,2 | 405 |
| 11 | 6,1 | " | 10 | 45,8 | 73,7 | 82,5 | 89,8 | 323 |

0075703

## Beispiel 12

Beipiel 3 wurde ohne Toluol als Lösungsmittel wiederholt. Der SiH-Umsatz nach 2 Stunden betrug 98,4 %. Das erhaltene Produkt hatte eine Viskosität von 402 mPa·s.

## Beispiel 13

224 g (ca. 25 % Überschuß) eines Allylpolyethermonools mit einer JZ von 43,8 der 80 Gew.-% Ethylenoxid und 20 Gew.-% Propylenoxid im Polyoxialkylenanteil enthielt und dessen OH-Gruppen sekundär waren, und 400 ml Toluol wurden in einem mit Rührer, Thermometer, Gaseinleitung und Destillationsaufsatz versehenen Kolben vorgelegt und durch Abdestillieren von ca. 140 ml Toluol aceotrop getrocknet. Die Trocknung und weitere Reaktion wurden unter Durchleitung von Stickstoff durchgeführt. Danach wurde der Kolben mit einem Rückflußkühler versehen, und bei 105°C wurden 10 ppm Pt in Form von 5 mg trans-$[PtCl_2(NH_3)_2]$ zugesetzt.

Nach 5 Min. wurden 100 g eines Siloxans mit der mittleren Zusammensetzung von $(CH_3)_3SiO[(CH_3)HSiO]_{3,1}[(CH_3)_2SiO]_{8,8}Si(CH_3)_3$ in 20 Min. zugetropft und der Ansatz 2,5 Stundenbei 105°C gerührt. Danach wurden 3 g Bentonit bei 60°C eingerührt. Nach 1 Stunde wurde der Ansatz filtriert und anschließend durch Destillation bei 70°C und 20 mbar vom Toluol befreit. Das erhaltene Produkt war klar und fast farblos. Die Analyse ergab einen SiH-Umsatz von 97,1 %. Das Produkt hatte eine Viskosität (20°C) von 298 mPa·s.

## Beispiel 14

Das Beispiel 13 wurde unter Einsatz von 5 ppm Pt in Form von 2,5 mg trans-$[PtCl_2(NH_3)_2]$ und 4 Stunden Reaktionszeit wiederholt. Der SiH-Umsatz betrug 87 %, und die Viskosität (20°C) lag bei 275 mPa.s.

## Beispiel 15

458 g (ca. 25 % Überschuß) eines Allylpolyethermonools mit einer JZ von 43, der primäre OH-Gruppen enthielt und dessen Polyoxialkylenanteil zu 85 Gew.-% aus Ethylenoxid und 15 Gew.-% aus Propylenoxid bestand, und 200 g eines Wasserstoffsiloxans mit der durchschnittlichen Formel

$$(CH_3)_3SiO\left[(CH_3)HSiO\right]_{3,1}\left[(CH_3)_2SiO\right]_{8,8}Si(CH_3)_3$$

wurden in 650 ml Toluol als Lösungsmittel in Gegenwart von 10 ppm Pt in Form von 10,2 mg cis-$\left[PtCl_2(NH_3)_2\right]$ umgesetzt. Apparatur und Ausführung entsprachen denen in Beispiel 13, mit der Ausnahme, daß die Umsetzung bei einer Temperatur von 75 - 80°C durchgeführt wurde. Nach 2 Stunden Reaktionszeit wurde der Ansatz mit 6 g Bentonit behandelt. Der SiH-Umsatz hatte 99,2 % erreicht, und die Viskosität (20°C) lag bei 310 mPa·s.

## Beispiel 16

269 g (ca. 20 % Überschuß) des bei Beispiel 13 eingesetzten Allylpolyethermonools (JZ = 43,8) und 142 g eines Wasserstoffsiloxans mit der durchschnittlichen Formel

$$(CH_3)_3SiO\left[(CH_3)HSiO\right]_{5,8}\left[(CH_3)_2SiO\right]_{21,9}Si(CH_3)_3$$

wurden in 400 ml Toluol in Gegenwart von 10 ppm Pt in Form von 6,3 mg cis-$\left[PtCl_2(NH_3)_2\right]$ umgesetzt. Der Ansatz wurde mit 2 g Bentonit behandelt. Ansonsten wurden die Bedingungen von Beispiel 13 eingehalten. Der SiH-Umsatz lag bei 97 %, und die Viskosität (20°C) betrug 439 mPa·s.

## Beispiel 17

240 g (ca. 25 % Überschuß) des bei Beispiel 13 eingesetzten Allylpolyethermonools (JZ = 43,8) und 123 g eines Wasserstoffsiloxans mit der durchschnittlichen Formel

$$(CH_3)_3SiO\left[(CH_3)HSiO\right]_{11,6}\left[(CH_3)_2SiO\right]_{46,4}Si(CH_3)_3$$

wurden in 360 ml Toluol in Gegenwart von 10 ppm Pt in Form von 5,6 mg cis-$[PtCl_2(NH_3)_2]$ umgesetzt. Die Umsetzung erfolgte bei 113 - 115 °C. Das Siloxan wurde in 45 Min. zugetropft. Der Ansatz wurde mit 3 g Bentonit behandelt. Ansonsten wurden die Bedingungen von Beispiel 13 eingehalten. Der SiH-Umsatz erreichte 97,4 %, und das erhaltene Produkt hatte eine Viskosität (20 °C) von 1057 mPa·s.

## Beispiel 18

1260 g (ca. 10 % Überschuß) eines Allylpolyethermonools mit einer JZ von 17, der sekundäre OH-Gruppen enthielt und dessen Polyoxialkylenanteil zu 15 Gew.-% aus Ethylenoxid und 85 Gew.-% aus Propylenoxid bestand, und 50 g eines Wasserstoffsiloxans mit der durchschnittlichen Formel

$$(CH_3)_3SiO\left[(CH_3)HSiO\right]_{30,5}Si(CH_3)_3$$

wurden in 1300 ml Toluol in Gegenwart von 20 ppm Pt in Form von 40,3 mg cis-$[PtCl_2(NH_3)_2]$ umgesetzt. Der Ansatz wurde mit 13 g Bentonit behandelt.

Das Siloxan wurde in 35 Min. eingetropft, und die Reaktionstemperatur betrug 112 °C. Ansonsten wurden die Bedingungen von Beispiel 13 eingehalten.

Es wurde ein SiH-Umsatz von 89 % erreicht, und die Viskosität (20 °C) betrug 2390 mPa·s.

## Beispiel 19

Beispiel 18 wurde wiederholt mit der Abänderung, daß 20 ppm Pt in Form von $H_2PtCl_6 \cdot 6\ H_2O$ (10 %ig in i-Propanol) angewendet wurden. Das erhaltene Produkt war ein nicht mehr fließfähiges Gel.

## Beispiel 20

Dieses Beispiel soll den geringen Einfluß der beanspruchten Verbindungen auf die Reaktion $\equiv SiH + \equiv COH \rightarrow \equiv SiOC\equiv + H_2$ aufzeigen. 433 g (ca. 25 % Überschuß) eines Allylpolyethermonools mit einer JZ von 29,9, der sekundäre OH-Gruppen enthielt und dessen Polyoxialkylenanteil zu 78 Gew.-% aus Ethylenoxid und 22 Gew.-% Propylenoxid bestand, wurde mit 132 g eines Siloxans mit der durchschnittlichen Formel

$$(CH_3)_3SiO\left[(CH_3)HSiO\right]_{3,1}\left[(CH_3)_2SiO\right]_{8,8}Si(CH_3)_3$$

in Gegenwart von 15 ppm Platin in Form von 13 mg cis-$\left[PtCl_2(NH_3)_2\right]$ umgesetzt.

Die Umsetzung wurde wie folgt durchgeführt: Der aceotrop getrocknete, toluolfreie Polyether wurde in einem mit Rührer, Thermometer und Gaseinleitung versehenen 1-l-Vierhalskolben vorgelegt und unter Durchleitung eines getrockneten Stickstoffstromes auf 100°C erwärmt. Nun wurden nacheinander der Katalysator und das Wasserstoffsiloxan schnell auf einmal dem Polyether zugegeben. Die Stickstoffeinleitung wurde entfernt, der Kolben völlig verschlossen und der Ansatz 2,5 Stunden bei 100°C gerührt. Nach dem Abkühlen wurde der Wasserstoffgehalt in der über dem Reaktionsprodukt befindlichen Gasphase bestimmt. Die gefundene Wasserstoffmenge von absolut 1,1 ml ergab, bezogen auf den in Form von SiH-Gruppen eingesetzten Wasserstoff, ein Ausmaß an Nebenreaktion von 0,012 %. Die Bestimmung des SiH-Umsatzes ergab 99,3 %.

## Beispiel 21

Eingesetzt wurde ein Allylpolyether, der anstelle der OH-Endgruppe eine Methoxi-Endgruppe besaß. Der Polyether hatte eine JZ von 28,9 und besaß im Polyoxialkylenanteil 80 Gew.-% Ethylenoxid und 20 Gew.-% Propylenoxid. 313 g (15 % Überschuß) dieses mit einer Methoxigruppe abgeschlossener Allylpolyethers und 100 g eines Wasserstoffsiloxans mit der

durchschnittlichen Formel von

$$(CH_3)_3SiO\left[(CH_3)HSiO\right]_{3,1}\left[(CH_3)_2SiO\right]_{8,8}Si(CH_3)_3$$

wurden in 400 ml Toluol in Gegenwart von 20 ppm Platin in Form von 1,27 g einer 1 %igen Lösung von cis-$[PtCl_2(NH_3)_2]$ in Dimethylformamid umgesetzt. Der Ansatz wurde mit 4 g Bentonit behandelt. Ansonsten wurden die Bedingungen von Beispiel 13 eingehalten. Der SiH-Umsatz lag bei 95,5 %, und die Viskosität (20°C) betrug 339 mPa.s.

## Beispiel 22

150 g (ca. 15 % Überschuß) eines Allylpolyethermonools mit einer JZ von 86, der durch Anlagerung von Propylenoxid an Allylalkohol erhalten worden war, und 117 g eines Wasserstoffsiloxans mit der durchschnittlichen Formel

$$(CH_3)_3SiO\left[(CH_3)HSiO\right]_{4,4}\left[(CH_3)_2SiO\right]_{3,8}\left[CH_3(C_6H_5)SiO\right]_{3,4}Si(CH_3)_3$$

wurden in 150 ml Toluol in Gegenwart von 10 ppm Platin in Form von 4,1 mg cis-$[PtCl_2(NH_3)_2]$ umgesetzt. Der Ansatz wurde mit 2,5 g Bentonit behandelt. Ansonsten wurden die Bedingungen wie bei Beispiel 13 eingehalten. Der SiH-Umsatz betrug 97,5 %.

## Beispiel 23

346 g (ca. 25 % Überschuß) eines Allylpolyethermonools mit einer JZ von 8,8, der sekundäre OH-Gruppen enthielt und dessen Polyoxialkylenanteil zu 35 Gew.-% aus Ethylenoxid und zu 65 Gew.-% aus Propylenoxid bestand, und 71 g eines Wasserstoffsiloxans mit der durchschnittlichen Formel

$$(CH_3)_3SiO\left[(CH_3)HSiO\right]_{4,8}\left[(CH_3)_2SiO\right]_{22,6}\left[CH_3(ClCH_2CH_2CH_2)SiO\right]_{10,5}Si(CH_3)_3$$

wurden in 450 ml Toluol in Gegenwart von 15 ppm Platin in

Form von 0,96 g einer 1 %igen Lösung von cis-$[PtCl_2(NH_3)_2]$ in Dimethylformamid umgesetzt. Der Ansatz wurde mit 4 g Bentonit behandelt. Ansonsten entsprachen die Bedingungen denen von Beispiel 13. Der SiH-Umsatz betrug 94,8 %, und das Produkt hatte eine Viskosität (20°C) von 1580 mPa·s.

Beispiel 24

In einem mit Rührer, Thermometer, Rückflußkühler und Gaseinleitung versehenen Vierhalskolben wurden 126 g Allylglycidether (ca. 10 % Überschuß) und 10 ppm Platin in Form von 5,7 mg cis-$[PtCl_2(NH_3)_2]$ vorgelegt. Unter Stickstoffatmosphäre wurden bei 100°C 245 g eines Wasserstoffsiloxans mit der durchschnittlichen Formel

$$H(CH_3)_2SiO[(CH_3)_2SiO]_{4,8}Si(CH_3)_2H$$

in 30 Min. zugetropft, und der Ansatz wurde 1,5 Stunden bei 100°C gerührt. Danach wurden bei 60°C 3,7 g Bentonit eingerührt. Nach 1 Stunde wurde der Ansatz filtriert. Der SiH-Umsatz hatte 99 % erreicht, und die Viskosität (20°C) des Produktes lag bei 11,8 mPa·s.

0075703

Patentansprüche:

1. Verfahren zur Addition von Silanen oder Siloxanen, welche SiH-Gruppen aufweisen, jedoch frei von Substituenten sind, welche nach Abspaltung vom Si-Atom als Protonenakzeptoren reagieren, an Verbindungen mit olefinischen Doppelbindungen in Gegenwart von Katalysatoren der Platingruppe, dadurch gekennzeichnet, daß man als Katalysatoren Verbindungen der allgemeinen Formel

$$\left[YX_2(NH_3)_2\right]$$

worin Y ein Platin- oder Palladiumrest,
X ein Chlor-, Brom- oder Jodrest oder die $NO_2$-Gruppe ist,

in wirksamen Mengen verwendet.

2. Verfahren nach Anspruch 1, dadurch gekennzeichnet, daß man als Katalysator $\left[PtCl_2(NH_3)_2\right]$ verwendet.

3. Verfahren nach Anspruch 1 oder 2, dadurch gekennzeichnet, daß man den Katalysator in seiner cis-Form verwendet.

4. Verfahren nach einem oder mehreren der vorhergehenden Ansprüche, dadurch gekennzeichnet, daß man den Katalysator in einer Menge von $10^{-2}$ bis $10^{-8}$ Mol je Mol SiH-Gruppen im Silan bzw. Siloxan verwendet.

5. Verfahren nach einem oder mehreren der vorhergehenden Ansprüche, dadurch gekennzeichnet, daß man den Katalysator in einer Menge von $10^{-3}$ bis $10^{-6}$ Mol je Mol SiH-Gruppen im Silan bzw. Siloxan verwendet.

6. Verfahren nach einem oder mehreren der vorhergehenden Ansprüche, dadurch gekennzeichnet, daß man den Katalysator in der Verbindung mit olefinischen Doppelbindungen verteilt und das SiH-Gruppen aufweisende Silan oder Siloxan hinzufügt.

7. Verfahren nach Anspruch 6, dadurch gekennzeichnet, daß man die Additionsreaktion in Gegenwart von in bezug auf die Reaktion inerten Lösungsmitteln durchführt.

Europäisches Patentamt

# EUROPÄISCHER RECHERCHENBERICHT

0075703

Nummer der Anmeldung

EP 82 10 7357

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-1 900 968 (DOW CORNING) * Anspruch 1; Seite 8, Absatz 1; Seiten 16,17; Beispiel 3B * | 1,2 | C 08 L 83/00<br>C 08 G 77/46<br>C 08 G 77/38<br>C 08 L 83/04 |
| Y | FR-A-2 016 385 (TOYO RAYON) * Ansprüche 1,11; Seite 25, Beispiel 99; Seite 4, Zeile 31; Seite 10, Zeilen 5-15 * | 1 | |
| Y | US-A-3 697 473 (K.E. POLMANTEER) * Anspruch 1; Spalte 6, Zeile 40 * | 1 | |
| | ----- | | |
| | | | RECHERCHIERTE SACHGEBIETE (Int. Cl. ³) |
| | | | C 08 L<br>C 08 G<br>C 07 F |

Der vorliegende Recherchenbericht wurde für alle Patentansprüche erstellt.

| Recherchenort | Abschlußdatum der Recherche | Prüfer |
|---|---|---|
| DEN HAAG | 06-01-1983 | DEPIJPER R.D.C. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82